# FASCICULE DE BREVET EUROPEEN

(11) **EP 0 443 885 B1**
(45) Date de publication et mention de la délivrance du brevet: **17.08.1994**
(21) Numéro de dépôt: 91400099.7
(22) Date de dépôt: 17.01.1991
(51) Int. Cl.: G01V 3/08

(54) **Dispositif de fixation d'un détecteur de proximité inductif sur une machine**
Befestigungsvorrichtung für einen Induktivdetektor an einer Maschine
Fixing device for an inductive detector on a machine

(30) Priorité: 23.02.1990 FR 9002306
(43) Date de publication de la demande: 28.08.1991
(73) Titulaire: AUTOMOBILES PEUGEOT, 75116 Paris (FR); AUTOMOBILES CITROEN, 92200 Neuilly-sur-Seine (FR)
(72) Inventeur: Ecarot, Gérald, F-25310 Roches les Blamont (FR)
(74) Mandataire: Durand, Yves Armand Louis

(56) Documents cités:
- US-A- 4 532 501

## Description

La présente invention a essentiellement pour objet un dispositif de fixation d'un détecteur de proximité inductif sur une machine.

On a déjà proposé des systèmes pour supporter les détecteurs, tels que par exemple des détecteurs de proximité inductifs, et qui permettent la fixation des détecteurs sur une machine quelconque.

Plus précisément, les détecteurs cylindriques actuels sont généralement fixés par vissage ou par boulonnage sur une platine ou sur une fourchette qui est elle-même fixée à l'endroit approprié sur une machine.

Mais en cas d'échange d'un détecteur, il est nécessaire d'effectuer des opérations de démontage et de remontage qui sont parfois longues et compliquées, sans parler du fait que ces opérations peuvent engendrer des détériorations sur les détecteurs, et il est surtout nécessaire d'effectuer une opération de réglage après remontage du nouveau détecteur.

Aussi, la présente invention a pour but de remédier à ces inconvénients en proposant un dispositif de fixation sur une machine d'un détecteur de proximité inductif, qui non seulement permet un échange rapide du détecteur sans la nécessité d'un réglage, mais qui protège aussi d'une manière efficace le détecteur contre les chocs et les projections de matières diverses qui se produisent dans les machines devant comporter un ou plusieurs détecteurs.

A cet effet, l'invention a pour objet un dispositif de fixation sur une machine d'un détecteur de proximité inductif cylindrique comportant un porte-détecteur monté sur une platine fixée sur ladite machine à un endroit approprié pour permettre la détection de la position d'un organe ou de la présence d'une pièce métallique, caractérisé en ce que le détecteur comporte un épaulement, en partie basse, et en ce que le porte-détecteur comprend une bride, serrée sur le détecteur par au moins une vis de fixation de ladite bride sur la platine traversée par le détecteur, lequel détecteur vient, d'un côté, buter par l'épaulement contre la bride, de façon que la partie active du détecteur fasse saillie de l'autre côté de la bride.

Suivant une autre caractéristique de ce dispositif, la bride comporte une partie fendue débouchant dans une ouverture dans laquelle est monté le détecteur et pincée par la vis de serrage de la bride.

Suivant encore une autre caractéristique, la bride comporte une partie sur laquelle est clippée l'extrémité libre du bras élastique d'un chapeau de protection coiffant, de manière amovible, la partie active du détecteur.

Suivant une réalisation préférée, la partie de la bride sur laquelle est clippé le bras est une barette ou analogue montée entre deux oreilles solidaires de la bride.

Selon encore une autre caractéristique de l'invention, le chapeau précité est intérieurement muni de nervures coopérant avec la paroi externe du détecteur lors du montage et du démontage du chapeau.

Ainsi, les nervures en question éviteront avantageusement l'effet de piston, c'est-à-dire favoriseront l'évacuation de l'air, lors du montage et du démontage du chapeau.

En position clippée et d'appui du chapeau sur la bride, le fond du chapeau demeurera espacé de l'extrémité ou face active du détecteur, de façon à éviter tout risque de détérioration possible de cette face ou extrémité.

Mais d'autres caractéristiques et avantages de l'invention apparaîtront mieux dans la description détaillée qui suit et se réfère aux dessins annexés donnés uniquement à titre d'exemple, et dans lesquels:
La figure 1 est une vue en perspective éclatée d'un dispositif porte-détecteur conforme à l'invention;
La figure 2 est une vue en perspective de ce dispositif équipé d'un détecteur représenté en position montée; et
La figure 3 est une vue schématique et en élévation d'une machine d'assemblage de tôles, équipée de détecteurs de proximité inductifs fixés sur cette machine à l'aide du dispositif porte-détecteur selon cette invention.

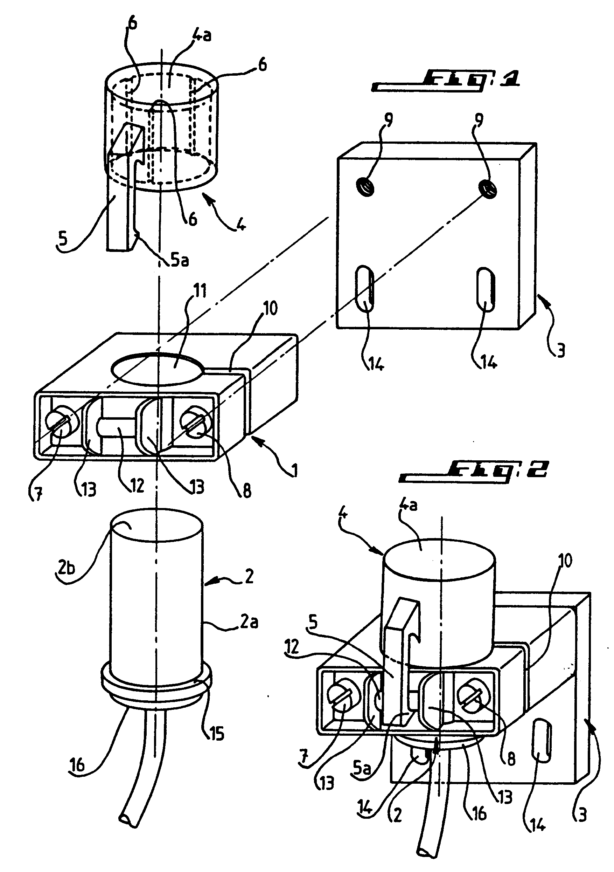

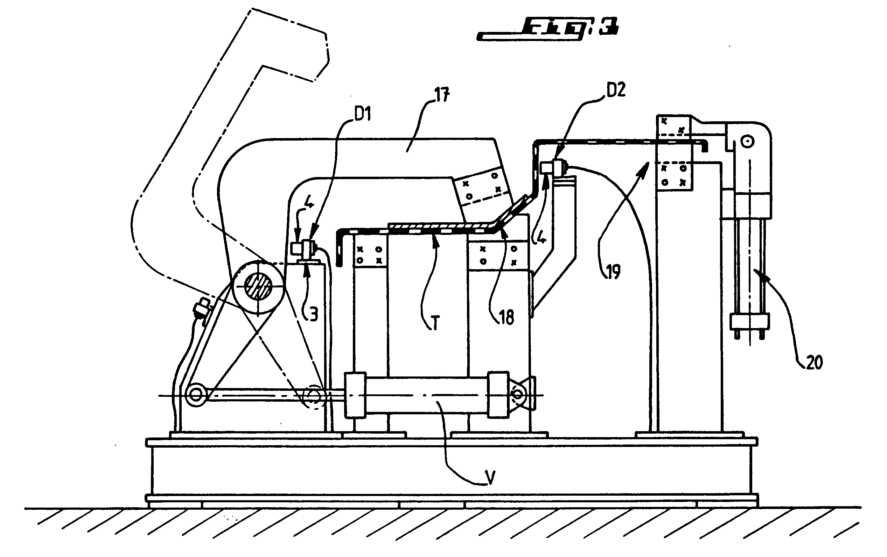

Suivant l'exemple de réalisation représenté sur les figures 1 et 2, un dispositif porte-détecteur conforme à cette invention comprend essentiellement un élément formant bride 1 pouvant recevoir un détecteur 2, une platine 3 sur laquelle peut être fixée, par vissage par exemple, la bride 1, et un chapeau 4 de forme générale cylindrique qui peut coiffer la partie active du détecteur 2 une fois ce dernier monté dans la bride 1, ledit chapeau étant fixé de manière amovible sur la bride 1.

Ce chapeau 4 est muni, sur sa paroi externe, d'un bras élastique 5 comportant une extrémité libre 5a en forme de crochet, suivant l'exemple représenté, de façon à permettre l'accrochage par clippage du chapeau 4 sur la bride 1, comme on le décrira en détail plus loin.

La paroi interne du chapeau 4 est pourvue de nervures 6 coopérant avec la paroi externe cylindrique 2a du détecteur 2 lors du montage et du démontage du chapeau 4.

La bride 1 comporte deux vis imperdables 7 et 8 permettant sa fixation sur la platine 3 comportant des orifices taraudés 9 aptes à recevoir les vis 7 et 8. La bride 1 est fendue, comme on le voit en 10 jusqu'à une ouverture 11 dans laquelle est monté traversant le détecteur 2, et l'une des deux vis imperdables, à savoir la vis 8 assure le maintien du détecteur 2 par pincement de la partie fendue de la bride 1. Cette bride 1 comporte encore une barrette 12 fixée entre deux oreilles ou analogue 13 solidaires de la bride, et c'est sur cette barrette 12 que viendra se clipper l'extrémité 5a en forme de crochet du bras 5 appartenant au chapeau 4, lors du montage de ce chapeau sur la paroi externe 2a du détecteur 2. Bien entendu, le bras 5 du chapeau 4 sera réalisé en une matière appropriée et ne perturbant pas le fonctionnement du détecteur, par exemple en polyester renforcé avec des fibres de verre.

On a montré en 14 des trous oblongs ménagés dans la platine 3 et permettant la fixation de cette platine avec tous les éléments décrits plus haut et préalablement fixés sur elle, sur un organe de machine quelconque. On notera que les trous oblongs 14 permettent le réglage de l'ensemble lors de la première monte, par déplacement de la platine 3. En effet, comme on le voit ci-après, le détecteur n'est pas réglable dans la bride. Mais, pour une meilleure compréhension de l'invention, on expliquera ci-après comment s'effectue le montage et le démontage du détecteur 2 en se reportant plus particulièrement à la figure 2.

La bride 1 étant retenue sur la platine 3 par les vis 7 et 8, il suffit d'introduire le détecteur cylindrique 2 dans l'ouverture 11 de la bride, jusqu'à ce qu'un épaulement 15 prévu en partie basse du détecteur 2, vienne buter contre l'une des faces de la bride, ce après quoi on exerce une action de vissage sur la vis 8 pour ainsi pincer le détecteur 2 dans la bride 1. Ainsi, comme on le comprend en se reportant à la figure 2, le détecteur 2 fait saillie d'un côté de la bride 1, c'est-à-dire du côté opposé à celui sur lequel prend appui l'épaulement 15 sous lequel est prévue une diode électro-luminescente 16 à éclairage annulaire susceptible de donner des informations sur l'état du détecteur 2.

On place ensuite le chapeau 4 sur le détecteur 2 jusqu'à ce qu'il prenne appui sur la bride 1, position dans laquelle le bras 5 viendra se clipper par son extrémité en forme de crochet 5a sur la barrette 12 solidaire de la bride 1. On remarquera ici qu'en position clippée et d'appui du chapeau 4 sur la bride 1, un espace sera laissé entre le fond 4a du chapeau 4 et la face active 2b du détecteur 2, de façon à éviter toute détérioration possible de cette face active, sous l'effet d'un choc.

On ajoutera que les nervures 6 prévues à l'intérieur du chapeau 4 et coopérant avec la paroi externe 2a du détecteur 2 éviteront avantageusement tout effet de piston lors du montage du chapeau 4, c'est-à-dire favoriseront l'évacuation de l'air lors de ce montage.

Si l'on veut remplacer le détecteur 2, il suffira d'effectuer les opérations inverses de celles décrites ci-dessus. A l'aide d'un outil approprié, le bras ou doigt 5 du chapeau 4 sera déclippé de la barrette 12, de sorte que le chapeau 4 pourra être enlevé, puis il suffira de dévisser la vis 8 pour pouvoir retirer le détecteur 2 et positionner un autre détecteur dans la bride 1. On notera ici que l'épaulement 15 garantira avantageusement la répétitivité de position du détecteur contre la bride de fixation 1.

Le dispositif porte-détecteur qui vient d'être décrit pourra par exemple être fixé sur la machine d'assemblage de tôles visibles sur la figure 3.

On voit sur cette figure un porte-détecteur D₁ fixé sur le bâti de la machine et comportant un détecteur susceptible de détecter le mouvement d'un abattant 17 commandé par un vérin V et permettant la mise en forme d'une tôle T, comme on le voit en 18.

Un autre porte-détecteur D₂ est fixé sur le bâti de la machine et comporte un détecteur pemettant la détection de la présence ou non de la tôle T sur la machine, cette tôle T étant maintenue par des mâchoires ou analogues 19 commandées par un vérin 20.

Bien entendu, les porte-détecteurs selon cette invention pourraient trouver application sur des outillages ou machines autres que celle représentée sur la figure 3.

On a donc réalisé suivant l'invention un dispositif porte-détecteur permettant un échange rapide du détecteur sans réglage ni difficultés particulières de montage ou de démontage, lesquels peuvent être effectués très rapidement. En outre, grâce au chapeau protégeant le détecteur, la durée de vie de celui-ci est augmentée, car les chocs ne sont plus encaissés par la face active du détecteur, mais par le chapeau lui-même et aussi par la bride. Par ailleurs, le chapeau de protection fait avantageusement écran aux projections de soudure qui, sans lui, provoqueraient des dépôts de métal sur la face active du détecteur inductif ce qui le rendrait inutilisable. Enfin, l'ensemble platine 3, bride 1, chapeau 4 permet de conserver une bonne visualisation de la diode électro-luminescente 16 pour la maintenance. Par ailleurs, la bride 1 de maintien du détecteur est réversible, de façon à permettre un accès à la vis 8 d'immobilisation du détecteur 2 d'un côté ou de l'autre.

Bien entendu, l'invention n'est nullement limitée au mode de réalisation de porte-détecteur décrit et illustré qui n'a été donné qu'à titre d'exemple.

C'est ainsi que la matière de la bride 1 et du chapeau 4 peuvent être quelconques à la condition bien sûr qu'elle soit compatible avec un fonctionnement correct du détecteur 2. Egalement les nervures prévues à l'intérieur du chapeau protégeant le détecteur peuvent être en un nombre quelconque et revêtir une forme quelconque.

## Revendications

1. Dispositif de fixation sur une machine d'un détecteur de proximité inductif cylindrique (2) comportant un porte-détecteur monté sur une platine (3) fixée sur ladite machine à un endroit approprié pour permettre la détection de la position d'un organe ou de la présence d'une pièce métallique, caractérisé en ce que le détecteur (2) comporte un épaulement (15), en partie basse, et en ce que le porte-détecteur comprend une bride (1), serrée sur le détecteur (2) par au moins une vis (8) de fixation de ladite bride sur la platine (3) traversée par le détecteur (2), lequel détecteur vient, d'un côté, buter par l'épaulement (15) contre la bride (1), de façon que la partie active du détecteur fasse saillie de l'autre côté de la bride (1).

2. Dispositif selon la revendication 1, caractérisé en ce que la bride (1) comporte une partie fendue (10) débouchant dans une ouverture (11) dans laquelle est monté le détecteur (2) et pincée par la vis (8) de serrage de la bride (1).

3. Dispositif selon la revendication 1 ou 2, caractérisé en ce que la bride (1) comporte une partie (12, 13) sur laquelle est clippée l'extrémité libre (5a) du bras élastique (5) d'un chapeau (4) de protection coiffant, de manière amovible, la partie active du détecteur (2).

4. Dispositif selon l'une des revendications 1 à 3, caractérisé en ce que la partie de la bride (1) sur laquelle est clippé le bras (5) est une barrette ou analogue (12) montée entre deux oreilles (13) solidaires de la bride (1).

5. Dispositif selon l'une des revendications 1 à 4, caractérisé en ce que le chapeau précité (4) est intérieurement muni de nervures (6) coopérant avec la paroi externe (2a) du détecteur (2) lors du montage et du démontage du chapeau (4).

6. Dispositif selon l'une des revendications 1 à 5, caractérisé en ce qu'en position clippée et d'appui du chapeau (4) sur la bride (1), le fond (4a) du chapeau (4) demeure espacé de l'extrémité ou face active (2b) du détecteur (2).

## Patentansprüche

1. Vorrichtung zur Befestigung, an einer Maschine, eines induktiven zylindrischen Nahewirkungsdetektors (2) mit einem an einer an der besagten Maschine an einer geeigneten Stelle befestigten Platte (3) angeordneten Detektorhalter, um die Ermittlung der Stellung eines Gliedes oder des Vorhandenseins eines Metallstücks zu gestatten, dadurch gekennzeichnet, dass der Detektor (2) eine Schulter (15) am unteren Teil aufweist und dass der Detektorhalter eine Schelle (1) umfasst, die auf dem Detektor (2) durch wenigstens eine Schraube (8) zur Befestigung der besagten Schelle an der durch den Detektor (2) durchsetzten Platte (3) geklemmt ist, welcher Detektor mit der Schulter (15) auf einer Seite an der Schelle (1) anschlägt, so dass der wirksame Teil des Detektors auf der anderen Seite der Schelle (1) hervorragt.

2. Vorrichtung nach Anspruch 1, dadurch gekennzeichnet, dass die Schelle (1) einen geschlitzten Teil (10) aufweist, der in eine Oeffnung (11) in welcher der Detektor (2) angeordnet ist, mündet und durch die Schraube (8) zum Einklemmen der Schelle (1) zusammengedrückt wird.

3. Vorrichtung nach Anspruch 1 oder 2, dadurch gekennzeichnet, dass die Schelle (1) einen Teil (12, 13) aufweist, auf welchem das freie Ende (5a) des elastischen Armes (5) einer den wirksamen Teil des Detektors (2) in abnehmbarer Weise abdeckenden Schutzhaube (4) aufgeklemmt ist.

4. Vorrichtung nach einem der Ansprüche 1 bis 3, dadurch gekennzeichnet, dass derjenige Teil der Schelle (1) auf welchem der Arm (5) aufgeklemmt ist, ein zwischen zwei mit der Schelle (1) fest verbundenen Ohren (13) gelagerter Stift oder dergleichen (12) ist.

5. Vorrichtung nach einem der Ansprüche 1 bis 4, dadurch gekennzeichnet, dass die vorgenannte Haube (4) innen mit mit der Aussenwand (2a) des Detektors (2) beim Aufsetzen und beim Abnehmen der Haube (4) zusammenwirkenden Rippen (6) versehen ist.

6. Vorrichtung nach einem der Ansprüche 1 bis 5, dadurch gekennzeichnet, dass in der aufgeklemmten Abstützstellung der Haube (4) auf der Schelle (1), der Boden (4a) der Haube (4) im Abstand von dem bzw. der wirksamen Ende bzw. Fläche (2b) des Detektors (2) bleibt.

## Claims

1. Device for the fastening, onto a machine, of an inductive cylindrical proximity detector (2) comprising a detector holder mounted onto a plate (3) fastened onto the said machine at a suitable location to permit the sensing of the position of a member or of the presence of a metal part, characterized in that the detector (2) comprises a shoulder (15) at the lower portion and in that the detector holder comprises a collar (1) clamped onto the detector (2) by at least one screw (8) for fastening the said clamp onto the plate (3) through which the detector (2) extends, which detector is abutting on one side with the shoulder (15) against the collar (1) so that the active portion of the detector projects from the other side of the collar (1).

2. Device according to claim 1, characterized in that the collar (1) comprises a split portion (10) opening into an aperture (11) into which the detector (2) is mounted and which is nipped by the screw (8) for tightening the collar (1).

3. Device according to claim 1 or 2, characterized in that the collar (1) comprises a portion (12, 13) onto which is clipped the free end (5a) of the elastic arm (5) of a protective cap (4) removably covering the active portion of the detector (2).

4. Device according to one of claims 1 to 3, characterized in that that portion of the collar (1) onto which is clipped the arm (5) is a bar or the like (12) mounted between two lugs (13) made fast to the collar (1).

5. Device according to one of claims 1 to 4, characterized in that the aforesaid cap (4) is provided inside with ribs (6) co-operating with the external wall (2a) of the detector (2) upon the mounting and the removal of the cap (4).

6. Device according to one of claims 1 to 5, characterized in that in the clipped and bearing position of the cap (4) on the collar (1), the bottom (4a) of the cap (4) remains spaced from the active end or face (2b) of the detector (2).
